# EUROPÄISCHE PATENTSCHRIFT

(11) **EP 1 920 952 B1**
(45) Veröffentlichungstag und Bekanntmachung des Hinweises auf die Patenterteilung: **20.04.2011**
(21) Anmeldenummer: 07021147.9
(22) Anmeldetag: 30.10.2007
(51) Int. Cl.: B60G 7/00, B60G 13/04, B60G 3/26

(54) **Quer- und Schräglenker**
Transverse and oblique control arm
Bras oscillant transversal et oblique

(30) Priorität: 10.11.2006 DE 102006053030
(43) Veröffentlichungstag der Anmeldung: 14.05.2008
(73) Patentinhaber: Dr. Ing. h.c. F. Porsche AG, 70435 Stuttgart (DE)
(72) Erfinder: Kunert, Reinhard, 71287 Weissach (DE); Schote, Norbert, 72119 Ammerbuch (DE)

(56) Entgegenhaltungen:
- DE-A1- 10 338 625
- DE-A1- 19 522 916
- FR-A- 2 710 583
- JP-A- 2 038 119
- US-A- 5 516 130
- US-B1- 6 719 314

## Beschreibung

Die vorliegende Erfindung betrifft einen Quer- oder Schräglenker für eine vorderer Fahrzeugachse gemäß dem Oberbegriff des Anspruchs 1. Die Erfindung betrifft außerdem ein mit einem derartigen Quer- oder Schräglenker ausgestattetes Fahrzeug.

Ein gattungsgemäßer Quer- oder Schräglenker ist aus der DE 103 38 625 A1 bekannt, wobei der Quer- oder Schräglenker die Räder des Fahrzeuges an Radträgern gelenkig lagert und wobei mindestens ein zwischen zwei am Fahrzeugaufbau in Fahrtrichtung zumindest annähernd hintereinander gelegenen Gelenkstellen verlaufender Lenkerarm gekrümmt beziehungsweise gebogen ausgeführt ist. Auf mindestens zwei Dritteln eines zwischen zwei Gelenkstellen gelegenen Abstandes weist der Lenker einen gebogenen Abschnitt auf. Hierdurch soll eine Einzelradaufhängung realisiert werden, welche im Falle eines Unfalls ohne Blockbildung einen Crashprozess stoßenergieverzehrend unterstützt.

Bei Unfällen, wie beispielsweise einem Frontalaufprall, besteht ein großes Sicherheitsrisiko für Fahrzeuginsassen darin, dass ein Fahrwerk des Fahrzeuges einen Block bildet und dadurch ein energieverzehrendes Knautschen eines Vorderwagens des Fahrzeuges im Bereich der Fahrwerksanbindung behindert. Hierbei bilden die steifen Fahrwerksteile zusammen mit den Lenkeranbindungen obengenannten Block, welcher sich nur wenig deformieren lässt und oft als ganzes auf eine Stirnwand der Fahrgastzelle drückt. In der Folge hiervon wird zu wenig Stoßenergie abgebaut und zudem das Fahrwerk gegen den Fußraum der Fahrgastzelle gedrückt, wodurch insbesondere in diesem Bereich ein erhöhtes Verletzungsrisiko bestehen kann.

Aus der DE 195 22 916 A1 ist eine Radaufhängung eines Fahrzeugs bekannt, mit einem Armelement, das aus einem gepressten Metallblech besteht und ein Paar von beabstandeten Vorder- und Hinterabschnitten aufweist, die an eine Fahrzeugkörperstruktur montiert sind, und zwar an zwei in Fahrzeuglängsrichtung beabstandeten Stellen, und einen Stützabschnitt für die Abstützung eines daran montierten Straßenrads aufweist, wobei das Armelement einen verformbaren Abschnitt hat, der ausgebildet ist, um die Quersteifigkeit des Aufhängungsarms in einer Seitenrichtung des Fahrzeugs zu gewährleisten, und welcher zwischen den Vorder- und Hintermontierabschnitten angeordnet ist, um gekrümmt zu werden, wenn eine Stoßkraft in Fahrzeuglängsrichtung ausgeübt wird.

Die vorliegende Erfindung beschäftigt sich mit dem Problem, für einen Quer- oder Schräglenker der gattungsgemäßen Art eine verbesserte Ausführungsform anzugeben, die sich insbesondere beim Überschreiten einer vordefinierten Kraft energieabsorbierend zusammendrücken lässt.

Erfindungsgemäß wird dieses Problem durch den Gegenstand des unabhängigen Anspruchs 1 gelöst. Vorteilhafte Ausführungsformen sind Gegenstand der abhängigen Ansprüche.

Die Erfindung beruht auf dem allgemeinen Gedanken, einen ersten Lenkerarm eines zwei Lenkerarme aufweisenden Quer- oder Schräglenkers mit unterschiedlich steifen Abschnitten insbesondere in Fahrzeuglängsrichtung zu versehen, wodurch im Crashfall eine vordefinierte und energieabsorbierende Verbiegung erzwungen werden kann. Dabei ist der erste Lenkerarm zwischen einer vorderen und einer hinteren, chassisseitigen Gelenkstelle gekrümmt ausgeführt, während der zweite Lenkerarm zwischen eben besagter hinteren Gelenkstelle und einer radseitigen Gelenkstelle gekrümmt verläuft. Zur Stossenergie absorbierenden Verbiegung weist der erste Lenkerarm einen in Fahrtrichtung vorne gelegenen Deformationsabschnitt sowie einen in Fahrtrichtung dahinter gelegenen steiferen Abschnitt auf, wobei sich der erste Lenkerarm im Crashfall nahezu ausschließlich in seinem Deformationsabschnitt verbiegt, das heißt energieabsorbierend verformt. Wie der Name bereits andeutet ist dabei die Steifigkeit, insbesondere die Biegesteifigkeit um eine in Fahrzeugquerrichtung verlaufende Biegeachse beim Abschnitt deutlich höher als beim Deformationsabschnitt des ersten Lenkerarms. Durch die erfindungsgemäße, abschnittsweise Ausbildung des ersten Lenkerarms kann eine genau definierte Biegung des ersten Lenkerarms im Crashfall in Fahrzeuglängsrichtung beziehungsweise beim Auftreten von Missbrauchslastfällen erzwungen werden, wodurch das Verletzungsrisiko von im Fahrgastraum befindlichen Fahrgästen deutlich reduziert werden kann, da der bisher zur Blockbildung neigende Quer- oder Schrägträger nunmehr als stoBenergieabsorbierendes Deformationselement wirkt. Bei einer quer auf das Rad wirkenden Belastung können sich die Seitenabschnitte verformen.

Erfindungsgemäß weist der erste Lenkerarm des Quer- oder Schräglenkers in seinem Abschnitt ein H-förmiges Profil auf. Ein solches Profil, üblicherweise auch als Doppel-T-Profil bezeichnet, weist eine besonders hohe Biegesteifigkeit durch die randseitig angeordneten Stege auf, wodurch der erste Lenkerarm in diesem Bereich sehr steif ist. Im Vergleich zu einem Vollprofil kann durch das erfindungsgemäße H-Profil jedoch nicht nur die Biegesteifigkeit erhöht werden, sondern zudem auch das Gewicht des Quer- oder Schräglenkers reduziert werden, was insbesondere im Sportwagenbau von großer Bedeutung ist.

Zweckmäßig geht der Deformationsabschnitt des ersten Lenkerarms fließend, das heißt absatzlos in den Abschnitt des ersten Lenkerarms über. Dies bewirkt einen besonders guten Kraftfluss, wobei sich mit diesem fließenden Übergang insbesondere Kraft- bzw. Spannungsspitzen, wie sie beispielsweise bei scharfem Material beziehungsweise Querschnittsprüngen auftreten können, vermeiden lassen.

Bei einer weiteren vorteilhaften Ausführungsform der erfindungsgemäßen Lösung verjüngt sich der Abschnitt des ersten Lenkerarms in Fahrtrichtung. Dies bedeutet, dass der erste Lenkerarm in seinem hinteren Endbereich eine im Vergleich zu seinem vorderen Endbereich sehr hohe Steifigkeit aufweist, welche sich in Fahrtrichtung, also in Richtung des Deformationsabschnittes zunehmend abbaut. Da die im hinteren Abschnitt erwünschte hohe Steifigkeit im vorderen Abschnitt, also im Bereich des Deformationsabschnittes nicht mehr erwünscht ist, bietet die so gestaltete Formgebung des ersten Lenkerarms das gewünschte Steifigkeitsgefälle vom Abschnitt zum Deformationsabschnitt.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: einen erfindungsgemäßen Quer- oder Schräglenker in einer perspektivischen Ansicht,
- Fig. 2: einen Quer- oder Schräglenker in einer Einbauposition,
- Fig. 3: eine Darstellung wie in Fig. 2, jedoch bei einem durch eine Missbrauchslast deformierten Quer- oder Schräglenker.

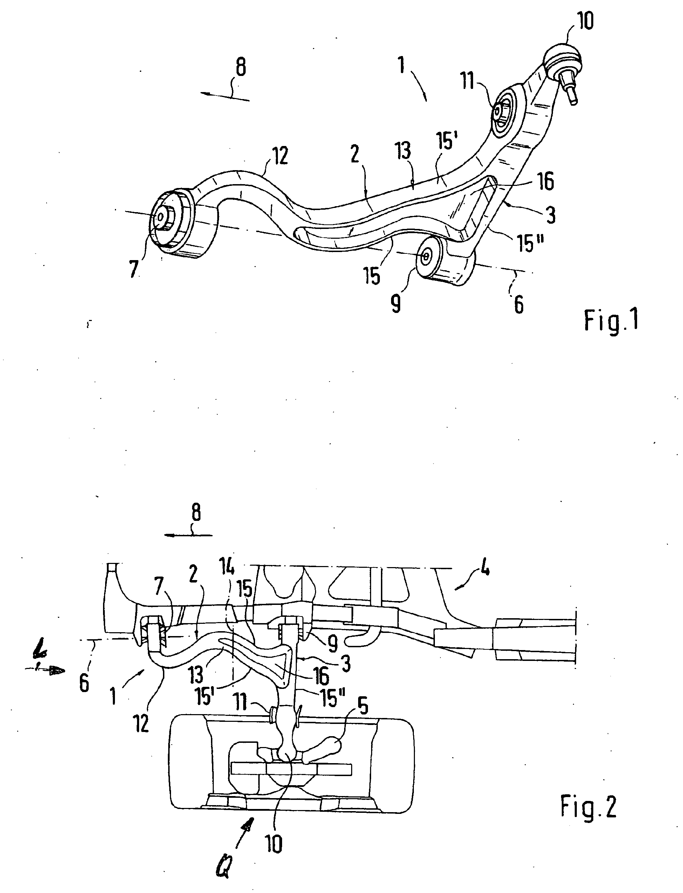

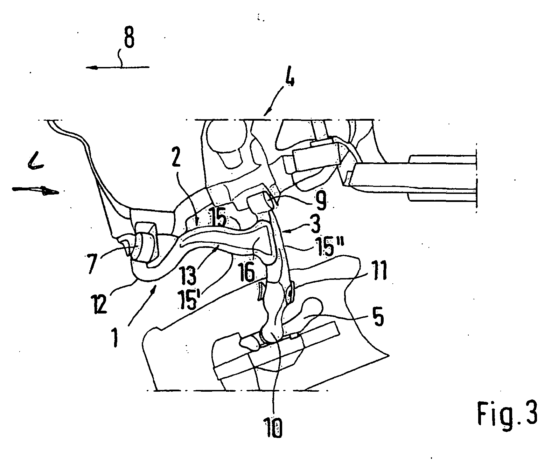

Entsprechend Fig. 1 weist ein erfindungsgemäßer Quer- oder Schräglenker 1 einen ersten Lenkerarm 2 sowie einen zweiten Lenkerarm 3 auf. Der Quer- oder Schräglenker 1 ist dabei in bekannter Weise an einer vorderen Fahrzeugachse (vgl. Fig. 2 und 3) angeordnet und einerseits gelenkig mit einer Karosserie 4 des Kraftfahrzeuges und andererseits gelenkig mit einem Lenkhebel 5 verbunden. Im Unterschied zu einem nicht gezeigten Federbeindom, welcher die vertikalen Kräfte des Fahrzeuges aufnimmt, nimmt der Quer- oder Schräglenker 1 die beim Beschleunigen, Bremsen und Kurvenfahren auftretenden horizontalen Kräfte auf. Der Quer- oder Schräglenker 1 ist dabei um eine Achse 6 verschwenkbar, wobei die Achse 6 im wesentlichen durch eine vordere chassisseitige Gelenkstelle 7 sowie eine in Fahrtrichtung 8 dahinter gelegene chassisseitige Gelenkstelle 9 verläuft. Beim Bremsen des Fahrzeuges wird somit die vordere Gelenkstelle 7 auf Zug und die hintere Gelenkstelle auf Druck belastet. Zwischen der vorderen Gelenkstelle 7 und der hinteren Gelenkstelle 9 ist der erste Arm 2 gekrümmt ausgeführt.

Demgegenüber verläuft der zweite Lenkerarm 3 von der hinteren chassisseitigen Gelenkstelle 9 zu einer radseitigen Gelenkstelle 10, welche gelenkig mit einem nicht gezeigten Radlager verbunden ist. Zwischen der hinteren Gelenkstelle 9 und der radseitigen Gelenkstelle 10, ist am zweiten Lenkerarm 3 eine weitere Gelenkstelle 11 vorgesehen, an welche beispielsweise ein nicht gezeigtes Feder-Dämpferbein gelenkig angeschlossen werden kann. Dabei können bei einer besonderen Ausgestaltung des erfindungsgemäßen Quer- oder Schräglenkers 1 sowohl die drei Gelenkstellen 7, 9 und 10 als auch der erste und der zweite Lenkerarm 2, 3 in einer Ebene liegen. Gemäß den Darstellungen in den Fig. 1 bis 3 mündet der erste Lenkerarm 2 im Bereich zwischen der hinteren chassisseitigen Gelenkstelle 9 und der weiteren Gelenkstelle 11 in den zweiten Lenkerarm 3.

Wie den Fig. 1 bis 3 zu entnehmen ist, weist der erste Lenkerarm 2 einen in Fahrtrichtung 8 vorne gelegenen Deformationsabschnitt 12 und einen in Fahrtrichtung 8 dahinter gelegenen steiferen Abschnitt 13 auf. Dabei ist eine Biegesteifigkeit des Abschnittes 13, insbesondere um eine in Fahrzeugquerrichtung verlaufende Biegeachse 14 im Vergleich zur Biegesteifigkeit des Deformationsabschnittes 12 deutlich erhöht. Die Erhöhung wird dabei von randseitig des ersten Lenkerarms 2 angeordneten Stegen 15 und 15' bewirkt, welche ein Widerstandsmoment des ersten Lenkerarmes 2 in dessen Abschnitt 13 vergrößern. Die randseitig angeordneten Stege 15 und 15' verleihen dem ersten Lenkerarm 2 in seinem Abschnitt 13 ein H-förmiges Profil, kurz auch Doppel-T-Profil genannt.

Erfindungsgemäß kann sich der erste Lenkerarm 2 bei einer Missbrauchslast, beispielsweise bei einem Frontalaufprall entgegen der Fahrtrichtung 8 in seinem Deformationsabschnitt 12 stoßenergieabsorbierend verformen, wodurch eine Blockbildung des Fahrwerkes verbunden mit den damit einhergehenden Verletzungsrisiken verhindert werden kann. In Fig. 2 ist dabei der Quer- oder Schräglenker 1 in seiner normalen Einbaulage gezeigt, während er in Fig. 3 nach dem Auftreten der Missbrauchslast, beispielsweise einem Unfall, in deformiertem Zustand gezeigt ist. Im Unterschied zum Abschnitt 13 kann der Deformationsabschnitt 12 des ersten Lenkerarmes 2 als Vollprofil ausgebildet sein, wodurch dieser deutlich weniger biegesteif ist und somit beim Auftreten einer Missbrauchslast eine Verformung des ersten Lenkerarmes 2 im Deformationsabschnitt 12 erzwungen wird.

Betrachtet man den ersten Lenkerarm 2 des Quer- oder Schräglenkers 1, so fällt auf, dass der Deformationsabschnitt 12 fließend, d.h. absatzlos, in den Abschnitt 13 übergeht, was sich besonders positiv auf einen möglichen Kraftfluss im Abschnitt 13 auswirkt, da dieser nicht aufgrund von beispielsweise vorgesehenen Querschnittssprüngen stark umgelenkt wird. Ebenso fällt auf, dass sich der Abschnitt 13 in Fahrtrichtung 8 verjüngt und der erste Lenkerarm 2 in seinem Deformationsabschnitt 12 ein im Vergleich zum Abschnitt 13 kleines und damit biegeweiches Querschnittsprofil besitzt. In seinem in Fahrtrichtung hinten gelegenen Bereich weitet sich der Abschnitt 13 zur hinteren chassisseitigen Gelenkstelle 9 und zur weiteren Gelenkstelle 11 hin auf, so dass eine Art Delta 16 entsteht, welches ebenfalls eine besonders gute Krafteinleitung vom ersten Lenkerarm 2 in den zweiten Lenkerarm 3 ermöglicht. Das Delta 16 ist dabei im wesentlichen von den Stegen 15 und 15' des ersten Lenkerarmes 2 sowie von einem Steg 15" entlang des zweiten Lenkerarmes 3 umrandet, wodurch der Einmündungsbereich des ersten Lenkerarmes 2 in den zweiten Lenkerarm 3 besonders steif ausgebildet werden kann. Dabei kann der zweite Lenkerarm 3 in seinem mittleren Bereich einen Teil des Abschnittes 13 des ersten Lenkerarmes 2 bilden. Die im Deformationsabschnitt 12 erzwungene Verbiegung beim Auftreten einer Missbrauchslast wird darüber hinaus dadurch unterstützt, dass der Deformationsabschnitt 12 im wesentlichen radial zur Achse 6 der vorderen Gelenkstelle 7 mündet. Das radiale Einmünden des Deformationsabschnittes 12 in die vordere Gelenkstelle 7 verbunden mit dem im wesentlichen W-förmigen Verlauf des ersten Lenkerarmes 2 zwischen der vorderen und der hinteren, chassisseitigen Gelenkstelle 7 und 9, unterstützen dabei die Deformierbarkeit weiter.

Bei Unfällen mit einem Frontaufprall stellen insbesondere deformationsträge Fahrwerksteile, wie beispielsweise ein schwer deformierbarer Querlenker, Sicherheitsrisiken dar, da derartige Fahrwerkskomponenten zu einer Blockbildung neigen, die nicht durch eine entsprechende Stoßenergie absorbierende Deformation zu einer Milderung des Aufpralls beitragen. Zusätzlich können derartige nicht deformationsfähige oder -willige Fahrwerkskomponenten als Ganzes in Richtung eines Fußraumes der Fahrgastzelle des Fahrzeuges verschoben werden, wodurch diese bei einem Unfall auf eine nicht gezeigte Stirnwand der Fußwand der Fahrgastzelle drücken und unter Umständen Verletzungen der im Fahrgastraum sitzenden Personen herbeiführen können. Aus diesem Grunde ist es wichtig, dass sich auch die Fahrwerksteile, wie beispielsweise der Quer- oder Schräglenker 1 bei einem Unfall Stoßenergie absorbierend deformieren. Die Erfindung schlägt deshalb vor, einen ersten Lenkerarm 2 eines Quer- oder Schräglenkers 1 mit einem relativ steifen Abschnitt 13 und einem dazu in Fahrtrichtung 8 davorgelegenen, biegeweichen Deformationsabschnitt 12 auszubilden. Bei einem Aufprall des Kraftfahrzeuges auf ein Hindernis, insbesondere bei einem Frontalaufprall oder bei einem sogenannten Bordsteinrempler, kann sich der erste Arm 2 zumindest in seinem Deformationsabschnitt 12 Stoßenergie absorbierend deformieren, wobei durch die steife Anbindung des ersten Lenkerarms 2 über dessen Abschnitt 13 an den zweiten Lenkerarm 3 auch letzterer engerieabsorbierend deformiert werden kann.

Bei einer Bordsteinberührung durch das Rad, d.h. bei einer Belastung schräg auf das Rad beispielsweise in Pfeilrichtung Q, können sich beide Abschnitte 12 und 13 energieabsorbierend verformen.

## Patentansprüche

1. Quer- oder Schräglenker (1) für eine vordere Fahrzeugachse, mit einem ersten Lenkerarm (2), der zwischen einer vorderen und einer hinteren, chassisseitigen Gelenkstelle (7, 9) gekrümmt ausgeführt ist und einem zweiten Lenkerarm (3), der zwischen der hinteren chassisseitigen Gelenkstelle (9) und einer radseitigen Gelenkstelle (10) verläuft, wobei der erste Lenkerarm (2) so ausgebildet ist, dass er sich bei einem Crash energieabsorbierend verformt,
**dadurch gekennzeichnet,**
- **dass** der erste Lenkerarm (2) einen in Fahrtrichtung (8) vorne gelegenen Deformationsabschnitt (12) und einen in Fahrtrichtung (8) dahinter gelegenen steiferen Abschnitt (13) aufweist,
- **dass** der erste Lenkerarm (2) so ausgebildet ist, dass er sich bei einem Frontcrash in Fahrzeuglängsrichtung (L) überwiegend in seinem Deformationsabschnitt (12) energieabsorbierend verformt,
- **dass** die Biegesteifigkeit des Abschnitts (13) um eine in Fahrzeugquerrichtung verlaufende Biegeachse (14) im Vergleich zur Biegesteifigkeit des Deformationsabschnitts (12) erhöht ist,
- **dass** der erste Lenkerarm (2) in seinem Abschnitt (13) ein H-förmiges Profil aufweist,
- **dass** der zweite Lenkerarm (3) zumindest in seinem mittleren Bereich einen Teil des Abschnittes (13) des ersten Lenkerarms (2) bildet.

2. Quer- oder Schräglenker nach Anspruch 1, **dadurch gekennzeichnet, dass** der Deformationsabschnitt (12) des ersten Lenkerarms (2) als Vollprofil ausgebildet ist.

3. Quer- oder Schräglenker nach einem der Anspruch 1 oder 2, **dadurch gekennzeichnet, dass** der Deformationsabschnitt (12) fließend, das heißt absatzlos, in den Abschnitt (13) übergeht.

4. Quer- oder Schräglenker nach einem der Ansprüche 1 bis 3, **dadurch gekennzeichnet, dass** die drei Gelenkstellen (7, 9, 10) sowie der erste und der zweite Lenkerarm (2, 3) in einer Ebene liegen.

5. Quer- oder Schräglenker nach einem der Ansprüche 1 bis 4, **dadurch gekennzeichnet, dass** sich der Abschnitt (13) in Fahrtrichtung (8) verjüngt.

6. Quer- oder Schräglenker nach einem der Ansprüche 1 bis 5, **dadurch gekennzeichnet, dass** der erste Lenkerarm (2) zwischen der vorderen und der hinteren, chassisseitigen Gelenkstelle (7, 9) einen W-förmigen Verlauf aufweist.

7. Quer- oder Schräglenker nach einem der Ansprüche 1 bis 6, **dadurch gekennzeichnet, dass** sich der Deformationsbereich (12) des ersten Lenkerarms (2) zur hinteren chassisseitigen Gelenkstelle (9) und zur radseitigen Gelenkstelle (10) hin aufweitet und in diese mündet.

8. Kraftfahrzeug mit einem Quer- oder Schräglenker nach einem der Ansprüche 1 bis 7.

## Claims

1. Transverse or oblique link (1) for a front vehicle axle, with a first link arm (2), which is designed such that it is curved between a front and a rear articulation point (7, 9) on the chassis, and a second link arm (3), which runs between the rear articulation point (9) on the chassis and an articulation point (10) on the wheel, wherein the first link arm (2) is designed in such a manner that it is deformed in an energy-absorbing manner in a crash, **characterized**
- **in that** the first link arm (2) has a deformation section (12) situated at the front in the direction of travel (8) and a stiffer section (13) situated behind it in the direction of travel (8),
- **in that** the first link arm (2) is designed in such a manner that, in a frontal crash in the longitudinal direction (L) of the vehicle, it is deformed in an energy-absorbing manner predominantly in its deformation section (12),
- **in that** the flexural rigidity of the section (13) about a bending axis (14) running in the transverse direction of the vehicle is increased in comparison to the flexural rigidity of the deformation section (12),
- **in that** the first link arm (2) has an H-shaped profile in its section (13),
- **in that** at least the central region of the second link arm (3) forms part of the section (13) of the first link arm (2).

2. Transverse or oblique link according to Claim 1, **characterized in that** the deformation section (12) of the first link arm (2) is designed as a solid profile.

3. Transverse or oblique link according to either of Claims 1 or 2, **characterized in that** the deformation section (12) merges continuously, i.e. without a step, into the section (13).

4. Transverse or oblique link according to one of Claims 1 to 3, **characterized in that** the three articulation points (7, 9, 10) and the first and the second link arms (2, 3) are situated on a plane.

5. Transverse or oblique link according to one of Claims 1 to 4, **characterized in that** the section (13) tapers in the direction of travel (8).

6. Transverse or oblique link according to one of Claims 1 to 5, **characterized in that** the first link arm (2) has a W-shaped profile between the front and the rear articulation point (7, 9) on the chassis.

7. Transverse or oblique link according to one of Claims 1 to 6, **characterized in that** the deformation region (12) of the first link arm (2) widens toward the rear articulation point (9) on the chassis and toward the articulation point (10) on the wheel and leads into the latter articulation point.

8. Motor vehicle with a transverse or oblique link according to one of Claims 1 to 7.

## Revendications

1. Bras oscillant transversal ou oblique (1) pour un essieu avant de véhicule, avec un premier bras de suspension (2), qui est réalisé sous forme incurvée entre un point d'articulation avant et un point d'articulation arrière du côté châssis (7, 9), et un deuxième bas de suspension (3), qui s'étend entre le point d'articulation arrière du côté châssis (9) et un point d'articulation du côté roue (10), dans lequel le premier bras de suspension (2) est configuré de telle manière qu'il se déforme en absorbant de l'énergie en cas de collision,
**caractérisé en ce que**
- le premier bras de suspension (2) présente une section déformable (12) située vers l'avant dans la direction de roulage (8) et une section plus rigide (13) située derrière celle-ci dans la direction de roulage (8),
- le premier bras de suspension (2) est configuré de telle manière qu'il se déforme principalement dans sa section déformable (12) en absorbant de l'énergie en cas de collision frontale dans la direction longitudinale (L) du véhicule,
- la rigidité en flexion de la section (13) autour d'un axe de flexion (14) s'étendant dans la direction transversale du véhicule est accrue par rapport à la rigidité en flexion de la section déformable (12),
- le premier bras de suspension (2) présente dans sa section (13) un profilé en forme de H,
- le deuxième bras de suspension (3) forme, au moins dans sa zone centrale, une partie de la section (13) du premier bras de suspension (2).

2. Bras oscillant transversal ou oblique selon la revendication 1, **caractérisé en ce que** la section déformable (12) du premier bras de suspension (2) est formée par un profilé plein.

3. Bras oscillant transversal ou oblique selon l'une quelconque des revendications 1 ou 2, **caractérisé en ce que** la section déformable (12) se prolonge de façon continue, c'est-à-dire sans retrait, dans la section (13).

4. Bras oscillant transversal ou oblique selon l'une quelconque des revendications 1 à 3 **caractérisé en ce que** les trois points d'articulation (7, 9, 10) ainsi que le premier et le deuxième bras oscillants (2, 3) sont situés dans un plan.

5. Bras oscillant transversal ou oblique selon l'une quelconque des revendications 1 à 4, **caractérisé en ce que** la section (13) s'amincit dans la direction de roulage (8).

6. Bras oscillant transversal ou oblique selon l'une quelconque des revendications 1 à 5, **caractérisé en ce que** le premier bras de suspension (2) présente un tracé en forme de W entre le point d'articulation avant et le point d'articulation arrière du côté châssis (7, 9).

7. Bras oscillant transversal ou oblique selon l'une quelconque des revendications 1 à 6, **caractérisé en ce que** la zone déformable (12) du premier bras de suspension (2) s'élargit en direction du point d'articulation arrière du côté châssis (9) et en direction du point d'articulation du côté roue (10), et débouche dans ceux-ci.

8. Véhicule automobile équipé d'un bras oscillant transversal ou oblique selon l'une quelconque des revendications 1 à 7.
